# EUROPEAN PATENT SPECIFICATION

(11) **EP 2 152 535 B1**
(45) Date of publication and mention of the grant of the patent: **11.07.2012**
(21) Application number: 07736855.3
(22) Date of filing: 16.05.2007
(51) Int. Cl.: B60J 5/04, B60J 10/00, B60J 10/08

(54) **COVER ITEM PROVIDED WITH A SEAL AND PRODUCTION METHOD THEREOF**
MIT EINER DICHTUNG VERSEHENES ABDECKUNGSOBJEKT UND HERSTELLUNGSVERFAHREN DAFÜR
ARTICLE DE COUVERTURE POURVU D'UN DISPOSITIF D'ÉTANCHÉITÉ ET PROCÉDÉ DE PRODUCTION DUDIT ARTICLE

(43) Date of publication of application: 17.02.2010
(73) Proprietor: UNITEAM ITALIA SRL, 30020 Quarto d'Altino (Venezia) (IT)
(72) Inventor: FIAMMENGO, Fabio, I-31021 Mogliano Veneto (Treviso) (IT)
(74) Representative: Dragotti, Gianfranco
(86) International application number: PCT/IT2007/000352
(87) International publication number: WO 2008/139501

(56) References cited:
- DE-A1- 19 804 781
- DE-A1-102004 053 622
- US-A1- 2003 019 161

## Description

The present invention refers to a manufactured cover item, for example for a vehicle door, equipped with a seal. The following description is made with reference to this field of application, with the goal of simplifying its illustration. The invention also refers to a method for the production of one such manufactured cover item, and to a vehicle comprising such an item.

The document DE102004053622 A discloses such a cover item and its production method.

It is known that car doors are composed of a metal panel and a manufactured cover item, usually a panelling, on which plastic components are housed/obtained, such as for example arms, grips, handles, switch housings etc.

The manufactured cover items are applied or glued to the metal frame with the interposition of a polymer seal, obtained according to the prior art with the following methods:
(i) the seal is separately made and is applied or mounted inside a groove or slot made in the plastic manufactured item, by pressing the seal so as to obtain the sealing by means of anchoring means. The seal in this case can be made with a thermoplastic elastomer, more frequently a thermosetting elastomer, of the type used for making seals of O-ring or polyurethane foam type;
(ii) the seal, still made separately, is glued by means of glues or solvents or simply attached with adhesives on the plastic manufactured item. Also in this case, the seal is usually a thermosetting piece;
(iii) the seal, in this case a polymeric foam, is applied to the previously moulded plastic manufactured item by means of a robotised plant which drips a liquid mixture in a prearranged groove by means of a mixing and metering head. The polymerisation occurs at a specific time, directly on the piece, leading to the formation of the seal. The mixing head can be fixed or moved by a robot.

The above-described methods have drawbacks. They require high process times for the production of the finished composite manufactured item (i.e., for example, a car door) which comprises the panel and the internal manufactured cover item equipped with seal. Consequently, the cost associated with the production is unavoidably high. The laying of the seal is difficult, so that the resulting composite manufactured items must often be discarded. Finally, one must often employ high-cost robotised systems.

The object of the present invention is to provide a production method of a manufactured cover item, equipped with seal, which eliminates the abovementioned problems.

Such object is reached with a production method of a manufactured cover item equipped with seal comprising the steps of
- forming a manufactured cover item by means of plastic material taking the shape of a main mould in which it is inserted,
- forming anchoring means for a seal associated with said manufactured cover item,
characterised in that it comprises the step of
- forming the seal by means of overmoulding it over the anchoring means.

Preferably, said anchoring means are slots prearranged for receiving the material, slots obtained with the traditional methods of two-component moulding.

Preferably, the moulding of the seal occurs immediately after the simultaneous moulding of the manufactured item and said anchoring means (for example by employing known mould part movement techniques to mould one piece on another already contained in the mould).

Also forming the object of the present invention is a manufactured item equipped with a seal characterised in that it is made according to the aforesaid method.

The invention attains the following advantages:
- high production speed of the finished manufactured item and possibility of large production quantities, thus eliminating the dead times and the waiting times for pieces in storage;
- the seal is obtained with classical moulding methods;
- highly qualified personnel are not required for the seal insertion;
- there is no use of robotised system for the application of the seal;
- a very high adhesion level is obtained, without using glues, adhesives or solvents and without the use of mechanical clasps;
- the aesthetic aspect of the obtained seal is high-level, seal joint and slippage lines are not visible;
- the system is very precise and repeatable, it does not depend on the operator;
- since the seal is thermoplastic, the discards can be recovered and the material possibly recycled.

The characteristics and advantages of the invention will be clear from the description, made here below, of an embodiment given as indicative and non-limiting with reference to the attached drawings.
- In figure 1, a manufactured cover item is shown equipped with seal according to the invention.
- In figure 2, an enlarged view is shown along the surface of section A-A of figure 1.
- In figure 3, a section is shown of a manufactured item according to the invention with regard to one variant.

Initially, a manufactured cover item 10 is formed (for example a vehicle door) by means of mechanical injection of a material in a prearranged mould, said main mould.

Such material is usually of thermoplastic type and/or has characteristics which allow it to easily take the shape of the mould in which it is inserted, without requiring any other manual or automated intervention.

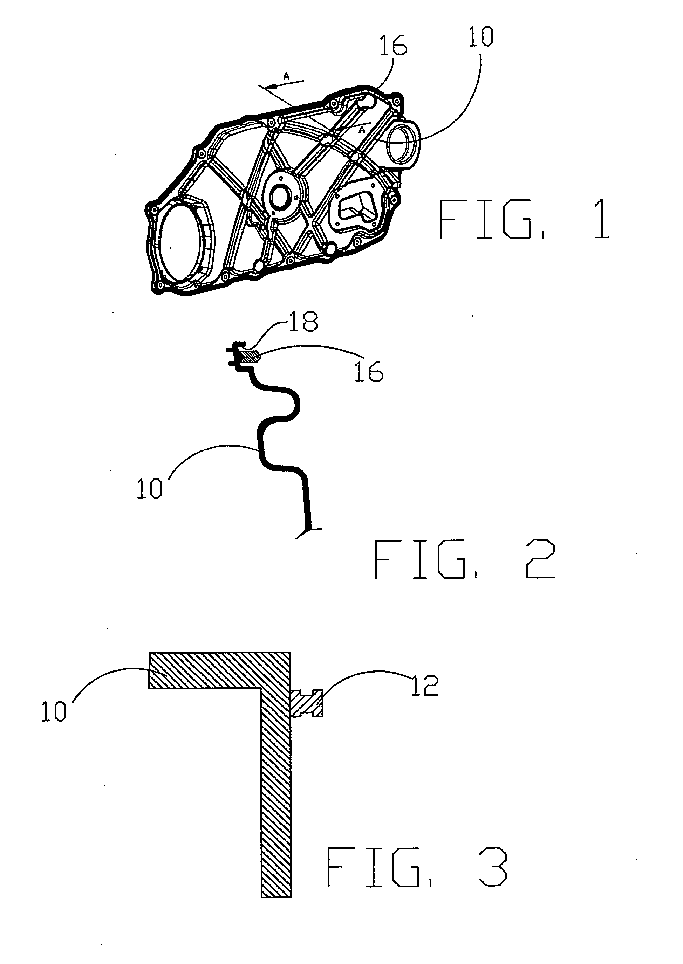

According to the invention, anchoring means are made on the manufactured cover item 10 so as to be able to anchor a seal 16, which then permits the coupling with a metal panel not shown in the figure. Such anchoring means can be made in different modes. According to one embodiment of the invention, there can be slots 18 made on the manufactured cover item 10 which are adapted to receive the seal 16 of elastomeric material; this is the case shown in figure 2.

Alternatively, pins with notches 12 can be used to permit the seal 16 to be locked on the manufactured cover item 10. According to one advantageous characteristic of the invention, the step of anchoring the seal 16 to the manufactured cover item 10 by means of slots 18 or pins with notches 12 occurs during the forming of the manufactured cover item in the main mould. The seal nevertheless does not necessarily need slots or pins to be locked on the piece, since the adhesion can be ensured by the chemical-physical compatibility of the two materials - that of the seal and that of the manufactured item 10. In this case, the anchoring means consist of adequate flat or corrugated zones, prearranged to accept the plastic material which upon solidification will make up the seal. Here, the slot can serve as a guide for a subsequent mounting, to ensure a perfect coupling to the metal panel such that the seal is set therein, or for protection of the seal during the coupling.

The slots 18 can be made according to known moulding techniques, such as moulding with moving blades; alternatively, a translation or rotation mould can be used.

The method according to the invention permits a high production speed of the finished manufactured item (completed door), ensuring large-scale productions and attaining the above-mentioned advantages.

At the end of the mould step, the manufactured item composed of the manufactured cover item 10 and the associated seal 16 is extracted.

## Claims

1. Production method of a manufactured cover item (10) equipped with seal (16) comprising the steps of
- forming a manufactured cover item (10) by means of plastic material taking the shape of a main mould in which it is inserted,
- forming anchoring means (12, 18) associated with said manufactured cover item (10), **characterised in that** it comprises the step of
- forming said seal (16) by means of overmoulding it over said anchoring means (12, 18).

2. Method according to claim 1, wherein said forming of the manufactured cover item (10) is carried out by means of injection or the plastic material into the main mould.

3. Method according to claim 1, wherein said anchoring means comprise slots (18) in the manufactured item (10).

4. Method according to claim 3, wherein said slots (18) are made with a moulding process by means of moving blades.

5. Method according to claim 3, wherein said slots (18) are made with a moulding process by means of translation of mould parts.

6. Method according to claim 3, wherein said slots (18) are made with a moulding process by means of rotation of mould parts.

7. Method according to claim 1, wherein said anchoring means comprises pins (12) with notches.

8. Method according to claim 1, wherein said seal (16) is composed of elastomeric material.

9. Method according to any one of the preceding claims, further comprising the step of extraction of the manufactured cover item (10) together with the seal (16) from the main mould.

10. Method according to any one of the preceding claims, wherein the forming of the seal occurs immediately after the moulding of the manufactured item and the forming of the anchoring means, leaving the item inside the mould.

11. Manufactured cover item for a vehicle door, equipped with a seal (16), made according to the method set forth in any one of claims 1 to 10, **characterized in that** seal joint and slippage lines of said seal (16) are not visible.

12. Vehicle door comprising a manufactured cover item according to claim 11, said manufactured item being produced with the method according to any one of claims 1 to 10.

## Patentansprüche

1. Produktionsverfahren für ein hergestelltes Abdeckungsobjekt (10) ausgestattet mit Abdichtung (16) aufweisend die Schritte des
- Formens eines hergestellten Abdeckungsobjekts (10) mittels Plastikmaterial, das die Form einer Hauptgussform einnimmt, in das es eingefügt wird,
- Formens von Verankerungsmitteln (12, 18), die mit dem hergestellten Abdeckungsobjekt (10) verbunden sind,
**dadurch gekennzeichnet, dass** es den Schritt des Formens der Abdichtung (16) mittels Übergießens über die Verankerungsmittel (12, 18) aufweist.

2. Verfahren gemäß Anspruch 1, wobei das Formen des hergestellten Abdeckungsobjektes (10) durchgeführt wird mittels Injektion des Plastikmaterials in die Hauptgussform.

3. Verfahren gemäß Anspruch 1, wobei die Verankerungsmittel Schlitze (18) in dem hergestellten Abdeckungsobjekt (10) aufweisen.

4. Verfahren gemäß Anspruch 3, wobei die Schlitze (18) mit einem Gießprozess mittels sich bewegender Schenkel hergestellt werden.

5. Verfahren gemäß Anspruch 3, wobei die Schlitze (18) mit einem Gießprozess mittels Verschiebung von Gussteilen hergestellt werden.

6. Verfahren gemäß Anspruch 3, wobei die Schlitze (18) mit einem Gießprozess mittels Rotation von Gussteilen hergestellt werden.

7. Verfahren gemäß Anspruch 1, wobei die Verankerungsmittel Bolzen (12) mit Aussparungen aufweisen.

8. Verfahren gemäß Anspruch 1, wobei die Abdichtung (16) aus Elastomermaterial besteht.

9. Verfahren gemäß irgendeinem der vorhergehenden Ansprüche weiterhin aufweisend den Schritt der Extraktion des hergestellten Abdeckungsobjektes (10) zusammen mit der Abdichtung (16) aus der Hauptgussform.

10. Verfahren gemäß irgendeinem der vorhergehenden Ansprüche, wobei das Formen der Abdichtung sofort nach dem Gießen des hergestellten Objekts und nach dem Formen der Verankerungsmittel geschieht, wobei sich das Objekt innerhalb der Gussformen befindet.

11. Hergestelltes Abdeckungsobjekt für eine Fahrzeugtür ausgestattet mit einer Abdichtung (16), welches gemäß dem Verfahren irgendeines der Ansprüche 1 bis 10 hergestellt wird, **dadurch gekennzeichnet, dass** die Abdichtungsverbindung und Schlupflinien der Abdichtung (16) nicht sichtbar sind.

12. Fahrzeugtür aufweisend ein hergestelltes Abdeckungsobjekt gemäß Anspruch 11, wobei das hergestellte Objekt mittels dem Verfahren gemäß irgendeinem der Ansprüche 1 bis 10 hergestellt wird.

## Revendications

1. Procédé de production d'un article de couverture manufacturé (10) équipé avec un dispositif d'étanchéité (16) comprenant les étapes consistant à :
former un article de couverture manufacturé (10) au moyen d'une matière plastique prenant la forme d'un moule principal dans lequel elle est insérée,
former des moyens d'ancrage (12, 18) associés avec ledit article de couverture manufacturé (10), **caractérisé en ce qu'**il comprend l'étape consistant à :
former ledit dispositif d'étanchéité (16) en le surmoulant sur lesdits moyens d'ancrage (12, 18).

2. Procédé selon la revendication 1, dans lequel ladite étape de formation de l'article de couverture manufacturé (10) est réalisée au moyen de l'injection de la matière plastique dans le moule principal.

3. Procédé selon la revendication 1, dans lequel lesdits moyens d'ancrage comprennent des fentes (18) dans l'article manufacturé (10).

4. Procédé selon la revendication 3, dans lequel lesdites fentes (18) sont réalisées avec un procédé de moulage au moyen de lames mobiles.

5. Procédé selon la revendication 3, dans lequel lesdites fentes (18) sont réalisées avec un procédé de moulage au moyen de la translation des parties de moule.

6. Procédé selon la revendication 3, dans lequel lesdites fentes (18) sont réalisées avec un procédé de moulage en moyen de la rotation des parties de moule.

7. Procédé selon la revendication 1, dans lequel lesdits moyens d'ancrage comprennent des broches (12) avec des encoches.

8. Procédé selon la revendication 1, dans lequel ledit dispositif d'étanchéité (16) est composé d'un matériau élastomère.

9. Procédé selon l'une quelconque des revendications précédentes, comprenant en outre l'étape consistant à extraire l'article de couverture manufacturé (10) conjointement avec le dispositif d'étanchéité (16) du moule principal.

10. Procédé selon l'une quelconque des revendications précédentes, dans lequel l'étape consistant à former le dispositif d'étanchéité a lieu immédiatement après le moulage de l'article manufacturé et la formation des moyens d'ancrage, en laissant l'article à l'intérieur du moule.

11. Article de couverture manufacturé pour une porte de véhicule, équipé avec un dispositif d'étanchéité (16), réalisé selon le procédé présenté selon l'une quelconque des revendications 1 à 10, **caractérisé en ce que** le joint d'étanchéité et les lignes de glissement dudit dispositif d'étanchéité (16) ne sont pas visibles.

12. Porte de véhicule comprenant un article de couverture manufacturé selon la revendication 11, ledit article manufacturé étant produit avec le procédé selon l'une quelconque des revendications 1 à 10.
